# EUROPEAN PATENT APPLICATION

(11) **EP 3 459 705 A1**
(43) Date of publication of application: **27.03.2019**
(21) Application number: 18000301.4
(22) Date of filing: 28.03.2018
(51) Int. Cl.: B29C 45/14, B23K 26/354

(54) **METHOD FOR MANUFACTURING COMPOSITE MEMBER**

(30) Priority: 26.09.2017 WO PCT/JP2017/034754
(71) Applicant: Sumitomo Riko Company Limited, Komaki-shi, Aichi 485-8550 (JP); Sumiriko Fine Elastomer, Ltd., Ageo-shi, Saitama 362-0044 (JP)
(72) Inventor: Okashita, Katsumi, Komaki-shi, Aichi-ken, 485-8550 (JP); Hayashi, Shota, Komaki-shi, Aichi-ken, 485-8550 (JP); Miwa, Yasuyuki, Komaki-shi, Aichi-ken, 485-8550 (JP); Shinozaki, Takahiro, Ageo-shi, Saitama-ken, 362-0044 (JP); Ishikuma, Yuko, Ageo-shi, Saitama-ken, 362-0044 (JP)
(74) Representative: Müller-Boré & Partner Patentanwälte PartG mbB

(57) **Abstract**

To provide a method for manufacturing a composite member including an aluminum die cast member and a polymer member firmly bonded by removing a carbide film on the surface of the aluminum die cast member to even the surface layer. The method includes: a melting step of melting a surface layer of a joint surface of the aluminum die cast member by irradiating the joint surface with a laser, the joint surface being joined with the polymer member; and a compounding step of integrally molding a polymeric material on the joint surface. The method may have a removal step of removing the carbide film present on the joint surface by irradiating the joint surface with the laser before the melting step, and a modification step of irradiating the joint surface with plasma to impart a hydroxyl group to the joint surface after the melting step.

## Description

The present invention relates to a method for manufacturing a composite member formed by compounding an aluminum die cast member with a polymer member.

A composite member is used for a casing of an electronic control unit such as an engine control unit mounted on an automobile. The composite member is constituted of a housing that is an aluminum die cast member, and a polymer member formed from a material, such as silicone rubber, to be bonded to the housing. An Al-Si-Cu alloy called ADC12 is among the known aluminum alloys for die casting (metallic mold casting). However, aluminum die cast members formed by die casting aluminum alloys, such as ADC12, have a poor adhesiveness with polymer members.

Various factors, such as organic dirt, may cause the poor adhesiveness. Among these, a carbide film formed on the surface of the aluminum die cast member poses a problem. The carbide film is considered to be composed of a residue of a release agent (a compound of oil, silicon, wax and the like) applied to a mold when the aluminum die cast member is produced. The release agent is graphitized by heat applied at die casting, and the graphitized release agent remains as a hard carbide film on the surface of the aluminum die cast member. When the aluminum die cast member with the carbide film formed on its surface is bonded to a polymer member, interfacial peeling of the polymer member occurs, which hinders sufficient bonding between the aluminum die cast member and the polymer member.

### Prior Art Documents

### Patent Documents

[Patent Document 1] Japanese Patent Application Publication No. 2014-86682 (JP 2014-86682 A)
[Patent Document 2] Japanese Patent Application Publication No. 2009-155358 (JP 2009-155358 A)
[Patent Document 3] Japanese Patent Application Publication No. 2016-129942 (JP 2016-129942 A)

It is difficult to remove the carbide film formed on the surface of the aluminum die cast member by washing with an organic solvent or by ultrasonic cleaning. Accordingly, it is necessary to apply wet treatment such as acid cleaning and alkali cleaning, or blast treatment such as bead blasting. However, in the case of the wet treatment, process control is difficult as it is necessary to adjust chemical concentration and to suppress reattachment of dirt. The blast treatment may disturb the adhesiveness since an uneven surface is formed on the aluminum die cast member due to collision of projection materials.

For example, a method for enhancing the adhesiveness without removal of the carbide film is disclosed in Patent Document 1. The method includes forming a silicone-based thin film or a carbon-based thin film on the surface of an aluminum die cast member with a plasma CVD method, and bonding the aluminum die cast member to a seal member constituted of a silicone adhesive through the thin film. Disclosed in Patent Document 2 is a method for bonding a curing substance (silicone rubber) of a moisture-curing silicone rubber composition to a base material through a silicon oxide film formed by combustion of an organic silicon compound. The method disclosed in Patent Document 2 includes treatment of applying a flame of fuel gas containing the organic silicon compound onto the surface of the base material. The treatment causes a serious damage on the base material. Although the aluminum die cast member is not described as a base material in Patent Document 2, a metal housing such as an aluminum die casting product is described in paragraph [0033] as a member to be bonded to silicone rubber on the opposite side from the base material. In paragraph [0034], it is described that forming an oxide film and the like in advance on the surface of the metal housing is desirable to enhance the adhesiveness. Thus, disclosed in Patent Document 1 and Patent Document 2 are merely the methods for forming a new thin film and not the method for removing the carbide film.

It is difficult to uniform an attachment degree and a composition of the carbide film whenever the die cast member is manufactured. For example, one aluminum die cast member may include a mixture of a portion coated with a thick carbide film and a portion not at all coated with the carbide film. In such a case, when a thin film is newly formed on top of the carbide film, the adhesiveness in the vicinity of a boundary between the portion coated with the carbide film and the portion not coated with the carbide film tends to become unstable. When the carbide film itself is vulnerable, the vulnerable carbide film causes decrease in adhesiveness. Accordingly, the carbide film may become a factor of deteriorating the productivity.

Factors that deteriorate the adhesiveness in the aluminum die cast member include the presence of the carbide film as well as the presence of a grain boundary. The grain boundary is formed on the surface layer of the aluminum die cast member due to uneven presence of trace amounts of metal components, such as copper, and iron, other than aluminum, in an island shape. As a result of the study made by the inventors of the present invention, it has been found out that the presence of the grain boundary tends to deteriorate the adhesiveness because in the grain boundary, a hydroxyl group is bonded differently from that in other areas, and corrosion tends to progress due to electron transfer between dissimilar metals.

In this connection, disclosed in Patent Document 3 is a method including forming perforated portions open to the surface of a metal member, modifying the surface of the perforated portions by treatment such as plasma treatment and laser treatment, and then joining the metal member with a resin member. In the method described in Patent Document 3, the perforated portions formed in the metal member are filled with the resin member to provide an anchor effect to enhance joint performance between the metal member and the resin member. The surface modification by treatment such as plasma treatment and laser treatment is performed to form an oxide film on the surface of the metal member. Thus, in Patent Document 3, no reference is made with respect to the influence of the carbide film and the grain boundary in the aluminum die cast member on the adhesiveness, and naturally, there is no discussion about the measures therefor.

The present invention has been made in view of such circumstances, and it is an object of the present invention to provide a method for manufacturing a composite member including an aluminum die cast member and a polymer member firmly bonded to each other by removing a carbide film on the surface of the aluminum die cast member so as to even the surface.

In order to accomplish the object, a method for manufacturing a composite member of the present invention is a method for manufacturing a composite member having an aluminum die cast member and a polymer member compounded with each other, the method being characterized by including a melting step of melting a surface layer of a joint surface of the aluminum die cast member by irradiating the joint surface with a laser, the joint surface being to be joined with the polymer member; and a compounding step of integrally molding a polymeric material on the joint surface.

In the method for manufacturing a composite member of the present invention, the joint surface of an aluminum die cast member to be joined with a polymer member is irradiated with a laser to melt a surface layer of the joint surface. With the laser irradiation, an aggregate of trace amounts of metal components, such as copper, and iron, unevenly present on the surface layer melts and disperses. As a result, grain boundaries decrease, and the surface layer is evened. This makes it possible to suppress adhesion failure conventionally caused by uneven distribution of hydroxyl groups generated in the grain boundaries, and adhesion failure caused by corrosion can be suppressed. When the surface layer is melted, the carbide film formed on the joint surface is also removed. As a consequence, an oxidation layer (natural oxidation layer) originally generated under the carbide film by nature rises to the surface. When the melting process progresses in this state, a chemical bond of molecules on the surface of the oxidation layer is broken, and the joint surface is activated. As a result, many hydroxyl groups are generated on the joint surface after the melting step. The hydroxyl groups react with and are chemically bonded to a material (polymeric material) forming the polymer member, which makes it possible to achieve firm bonding between the aluminum die cast member and the polymer member. As described in the foregoing, the manufacturing method of the present invention makes it possible to manufacture a composite member that is less likely to cause interfacial peeling of a polymer member and that is high in durability.

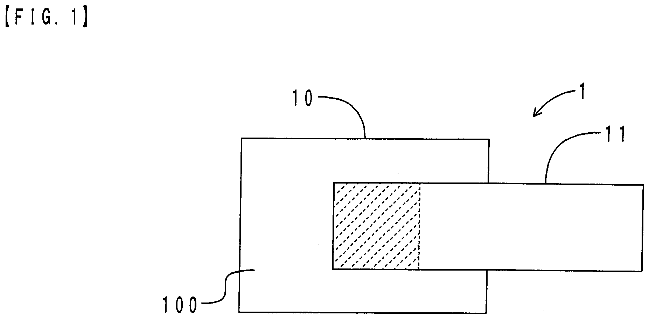

[FIG. 1] FIG. 1 is a plan view of a test piece manufactured in an example.

### Description of the Reference Numerals

1: test piece, 10: plate member (aluminum die cast member), 11: silicone member, 100: one surface of plate member

A method for manufacturing a composite member of the present invention is a method for manufacturing a composite member having an aluminum die cast member and a polymer member compounded with each other. The method includes a melting step and a compounding step.

The aluminum die cast member is a member manufactured by die casting of an aluminum alloy. The shape and size of the member are not particularly limited. The aluminum alloy for die casting is defined by JIS H5302:2006. Typical aluminum alloys for die casting include Al-Si-Cu alloys such as ADC12 and ADC10.

The polymer member is a member having resin or rubber (including thermoplastic elastomer) as a principal component. The shape of the polymer member is not particularly limited. For example, a silicone member having silicone resin or silicone rubber as a principal component is preferable as it is excellent in electric characteristics, heat resistance, cold resistance, incombustibility, and chemical stability.

The silicone member is manufactured by curing a composition containing organopolysiloxane and a crosslinking agent. The composition may contain agents such as a crosslinking promoter, a crosslinking retarder, a crosslinking assistant, an adhesion component, a scorch retarder, an age inhibitor, a softener, a thermostabilizer, a flame retarder, a flame retarder assistant, an ultraviolet ray absorbent, a rust-proofer, a conducting agent, and an antistatic agent as necessary.

Organopolysiloxane has at least two crosslinkable functional groups in one molecule. Examples of organopolysiloxane may include alkenyl group (such as vinyl group, and allyl group)-containing organopolysiloxane, hydroxyl group-containing organopolysiloxane, (metha) acrylic group-containing organopolysiloxane, isocyanate-containing organopolysiloxane, amino group-containing organopolysiloxane, and epoxy group-containing organopolysiloxane.

Examples of the crosslinking agent may include a hydrosilyl crosslinking agent, a sulfur crosslinking agent, and a peroxide crosslinking agent. Examples of the hydrosilyl crosslinking agent may include hydrosilyl group-containing organopolysiloxane (organohydrogen polysiloxane).

The adhesion component is desirably a compound having a functional group bondable with a hydroxyl group present on the joint surface of the aluminum die cast member. Examples of the functional group may include an alkoxy silyl group, a hydrosilyl group, and a silanol group. For example, a silane coupling agent may be used as a compound having the alkoxy silyl group. The silane coupling agent is a silane-based compound having two or more different functional groups in a molecule. Examples of the functional group other than the alkoxy silyl group in the silane coupling agent may include a vinyl group, an epoxy group, a styryl group, and a (metha) acrylic group. Specific examples of the silane coupling agent may include p-styryl trimethoxysilane, phenyltri (dimethyl siloxy) silane, vinyltrimetoxysilane, 3-glycidoxypropyltrimetoxysilane, 3-methacryloxy propyl trimethoxysilane, and vinyl trihydroxy silane.

Hereinafter, each step of the method for manufacturing a composite member of the present invention will be described.

### Melting Step

The present step is a step of melting a surface layer of a joint surface of an aluminum die cast member by irradiating the joint surface with a laser, the aluminum die cast member being joined with the polymer member.

As a laser, publicly known lasers such as an YAG laser, a YVO₄ laser, a rare earth-doped fiber laser, a semiconductor laser, and a fiber laser may be used. Among the lasers, the fiber laser is suitable in points of excellent light-gathering performance provided by a high-quality beam output from an optical fiber, as well as a good installation property, a long life, and easy maintenance.

The output of the laser may be adjusted such that the surface layer of the aluminum die cast member can be melted. For example, energy density (laser irradiation density) per unit area and unit time may be adjusted to be 2 J/mm² or more. The laser irradiation is more effective when the laser irradiation density is 4 J/mm² or more. In the viewpoint of reducing a heat damage to the aluminum die cast member, the laser irradiation density may be 40 J/mm² or less, and more preferably be 30 J/mm² or less. When laser irradiation is performed with the irradiation density of 2 J/mm² or more, the surface layer can be melted as well as a carbide film formed on the joint surface.

### (1) Removal Step

In the present step, melting of the surface layer of the joint surface may be performed in concurrence with removal of the carbide film. Alternatively, the removal of the carbide film is performed in advance, and then the melting of the present step may be performed. The methods for removing the carbide film may include laser treatment and plasma treatment. For example, the method for manufacturing a composite member of the present invention may have a removal step before the present step, the removal step of removing the carbide film present on the joint surface of the aluminum die cast member by irradiating the joint surface with the laser. In that case, consecutive execution of the removal step and the melting step is not necessarily essential. The melting step may be performed after the lapse of time, e.g., several hours and several days, after execution of the removal step. The removal of the carbide film may be performed with a laser irradiation density smaller than that in the melting. That is, for only the removal of the carbide film, laser irradiation may be performed with a relatively small laser irradiation density to minimize heat damage. Specifically, the laser irradiation density in the removal step is 0.5 J/mm² or more and less than 2 J/mm².

Performing the removal of the carbide film before the melting has two advantages. That is, (a) when the carbide film is present on the joint surface, a carbon component not removed in the melting step may be taken inside to become a potential cause of corrosion. Therefore, the risk of corrosion can be reduced by removing the carbide film in advance. (b) Since the carbide film is not evenly formed, how the surface layer melts may be changed depending on whether the carbide film is present. For example, a portion where metal is exposed may be easy to melt, and a portion covered with the carbide film may be hard to melt. In that case, it may be difficult to provide an even surface layer. Therefore, when the carbide film is removed in advance, the even surface layer may effectively be provided.

### (2) Modification step

Many hydroxyl groups are generated on the joint surface after the melting step. Here, from the viewpoint of generating more hydroxyl groups on the joint surface to maintain the high reactivity with a polymeric material for a longer time, modification for imparting hydroxyl groups to the joint surface may be performed after the melting step. That is, the method for manufacturing a composite member of the present invention may include a modification step of irradiating the joint surface of the aluminum die cast member with plasma to impart hydroxyl groups to the joint surface after the present step.

When the joint surface after the melting is irradiated with plasma, a chemical bond of molecules is broken by components such as ions and radicals in plasma, and the surface is activated, so that hydroxyl groups are generated. Since many hydroxyl groups are generated on the joint surface by plasma irradiation as a dry process, the hydroxyl groups are less likely to decrease even with the lapse of time. Accordingly, the high reactivity with polymeric materials can be maintained for a relatively long time. Therefore, even when integral molding in the subsequent compounding step is not performed immediately after the modification step (it goes without saying that the integral molding may be performed immediately after the modification step), firm bonding between the aluminum die cast member and the polymer member can be achieved.

The method for generating plasma is not particularly limited. For example, plasma such as RF plasma with a radiofrequency (RF) power source, microwave plasma with a microwave power source, and direct current (DC) pulse plasma may be adopted. The power source may be modulated. Among the plasma, the microwave plasma is suitable due to such reasons as high treatment speed due to large plasma density and less plasma damage on irradiation targets. When the microwave plasma is adopted in the modification step, many hydroxyl groups can efficiently be generated in short time.

The frequency of the power source for plasma generation is not particularly limited. Frequencies of the microwave may include 8.35 GHz, 2.45 GHz, 1.98 GHz, and 915 MHz. Frequencies of the RF may include 13.56 MHz. Frequencies of the DC may include 1 kHz to 500 kHz.

In plasma, ions, electrons, and radicals are present in a mixed state due to ionization of gas. For example, when plasma is generated in a gas atmosphere containing oxygen, an oxygen radical is generated. With surface adsorption and oxidation reforming effects of the oxygen radical, the joint surface can be activated in a relatively short time. The gas atmosphere containing oxygen may be air, or may be constituted of oxygen gas only, or may be constituted of mixed gas formed by mixing oxygen gas with other gases such as noble gases or nitrogen gas. The noble gases are preferably argon, xenon, or the like. For example, when the gas atmosphere containing oxygen is constituted of mixed gas formed by mixing one or more kinds of gases selected from noble gases and nitrogen gas with oxygen gas, a content ratio of the oxygen gas is desirably 30% or more with pressure or volume of the entire mixed gas being 100% from the viewpoint of effectively using the surface adsorption and oxidation reforming effects of the oxygen radical. When the gas atmosphere containing oxygen is constituted of oxygen gas only, it is possible to effectively take full advantage of the effects provided by the radicals.

Plasma irradiation may be performed under atmospheric pressure or under the vacuum decompressed to a specified pressure (atmospheric pressure plasma treatment or vacuum plasma treatment may be performed). When plasma irradiation is performed under vacuum in particular, damage to associated facilities caused by ozone generated in plasma can easily be prevented, and the mixed ratio of oxygen gas can be increased. Accordingly, the surface adsorption and oxidation reforming effects of the oxygen radical can effectively be demonstrated. Since the plasma density also becomes larger, the treatment speed can be increased. Since the area of a plasma irradiation range can easily be enlarged, high productivity is provided. Since the plasma density is large, the degree of activation on the joint surface becomes larger, which allows generation of more hydroxyl groups. Accordingly, on the joint surface, the high reactivity with the polymeric material can be maintained for a longer time. In the case of the vacuum plasma treatment, the pressure inside a container in which plasma is generated may be set to 1 Pa to 100 Pa.

### Compounding Step

The presen step is a step of integrally molding the polymeric material on the joint surface after the melting and then the modification thereto. The polymeric material is a material for forming the polymer member, and the material having resin or rubber (including thermoplastic elastomer) as a principal component. For example, when the polymer member is a silicone member, the polymeric material is a silicone material. As described in the foregoing, the silicone material may be prepared from organopolysiloxane, a crosslinking agent, an adhesion component, and the like.

For example, the present step may be performed by insert molding. That is, the aluminum die cast member after the melting step (after the modification step in some cases) may be placed in a die, a liquid polymeric material may be injected into the die so as to be in contact with the joint surface of the aluminum die cast member, and the polymeric material may be cured under specified temperature and pressure. Alternatively, a liquid polymeric material may be applied to the joint surface of the aluminum die cast member after the melting step (after the modification step in some cases) and be cured under specified temperature and pressure. The polymeric material cures into a polymer member, so that a composite member having firm bonding between the aluminum die cast member and the polymer member can be obtained.

The present step is desirably performed immediately after the melting step in order to avoid contamination of the joint surface and suppress reduction of the hydroxyl groups. When the modification is performed after the melting step, the present step may be performed immediately after the modification step, or may be performed after the lapse of time, e.g., several hours and several days, after the completion of the modification step. As described in the foregoing, the modification step sufficiently activates the joint surface. Accordingly, the generated hydroxyl groups are less likely to decrease even after the lapse of time, which makes it possible to maintain the high reactivity with the polymeric material for a relatively long time. Therefore, even when the present step is not performed immediately after the modification step, the hydroxyl groups and the polymeric material of the joint surface can be made to react with each other to achieve firm bonding. From the viewpoint of securing high adhesiveness, the present step is desirably performed within one week after the modification step.

The adhesiveness of the aluminum die cast member and the polymer member in the obtained composite member may be evaluated by performing a 90-degree peel test defined by JIS K 6256-2:2013. For example, when the peel strength in the peel test is 4 N/mm or more, and when cohesive failure occurs, the adhesiveness can be determined to be good.

The state (degree of activation) of the joint surface before the present step (after the melting step, and after the modification step in some cases) can be estimated by the magnitude of a water contact angle of the joint surface. For example, when the water contact angle of the joint surface is 50 degrees or less, it can be considered that sufficient hydroxyl groups are generated on the joint surface and the reactivity with the polymeric material is high. In the present specification, a value measured according to JIS R3257:1999 is adopted as a water contact angle.

The carbide film considered to be a residue of a release agent and the like is hardly present on the joint surface before the present step (after the melting step, and after the modification step in some cases). Although a small amount of organic substances floating in atmospheric air attach to the joint surface with the lapse of time, the amount of carbon contained at a depth of about 2 nm to 5 nm from the joint surface is smaller than that on the joint surface having the carbide film. For example, when the joint surface before the present step is analyzed by X-ray photoelectron spectroscopy (XPS), the number of C atoms is preferably 5% or more and 30% or less with a ratio of the total number of A1 atoms, O atoms, and C atoms being 100%.

### Examples

Now, a more specific description of the present invention will be given with use of Examples.

### Manufacturing of Test Piece

### Example 1

(1) A silicone material was prepared as follows. To 100 parts by mass of liquid silicone rubber (vinyl group-containing dimethylpolysiloxane: made by Gelest Inc., "DMS-V35"), 1 part by mass of p-styryl trimethoxysilane (made by Shin-Etsu Chemical Co., Ltd.) was added as an adhesion component, and was mixed by a planetary mixer for 30 minutes. To the mixture, 4 parts by mass of a hydrosilyl crosslinking agent (hydrosilyl group-containing dimethylpolysiloxane: made by Gelest Inc., "HMS-151") was added and further mixed for 30 minutes. Then, the mixture was defoamed under reduced pressure to prepare a liquid silicone material.
(2) A rectangular plate member (aluminum die cast member) was prepared by manufacturing Al-Si-Cu alloy ADC12 through die casting. The plate member had a long side of 60 mm, a short side of 45 mm, and a thickness of 2.0 mm.

First, the entire one surface of the plate member was subjected to laser treatment with a laser oscillator "YLS-2000-CT" made by IPG photonics Japan Co. The conditions of the laser treatment were as follows: laser spot diameter of about 0.4 mm, moving velocity of 100 mm/second, and laser irradiation density of 5.0 J/mm². The laser treatment in Example 1 corresponds to the melting step in the present invention. In Example 1, removal of the carbide film, and melting of the surface layer were concurrently performed in one laser treatment.

Next, the plate member one hour after the laser treatment was placed in a die, and the prepared silicone material was molded by injection molding at 140 °C with injection pressure of 0.3 MPa (compounding step). Thus, a test piece with the silicone member being vulcanized and bonded to a part of the one surface of the plate member was manufactured. A part of the one surface of the plate member bonded to the silicone member is included in the concept of the joint surface in the present invention. The manufactured test piece is included in the concept of the composite member in the present invention. FIG. 1 is a plan view illustrating the manufactured test piece.

As illustrated in FIG. 1, the test piece 1 includes a plate member 10 and a silicone member 11. The silicone member 11 has a strip shape. The silicone member 11 had a long side of 90 mm, a short side of 25 mm, and a thickness of 6 mm. A left end portion of the silicone member 11 is overlapped with and bonded to a part (a region of 25 mm x 25 mm hatched by a dotted line in FIG. 1) of one surface (upper surface) 100 of the plate member 10.

### Example 2

A test piece was manufactured in the same manner as in Example 1 except for the point that the entire one surface of the plate member same as Example 1 was subjected to the laser treatment twice under varied conditions. The conditions of the first laser treatment includes moving velocity of 400 mm/second and laser irradiation density of 0.8 J/mm², and the conditions of the second laser treatment includes moving velocity of 100 m/second and laser irradiation density of 5.0 J/mm². The first laser treatment corresponds to the removal step in the present invention, and the second laser treatment corresponds to the melting step in the present invention.

In Example 2, a plurality of plate members subjected to the laser treatment was similarly manufactured. By using the plate members, the water contact angle of the one surface of each of the plate members after the laser treatment was measured immediately after the laser treatment (melting step) and whenever specified time lapsed as described later. The plate members after the measurement were sequentially provided to the compounding step.

### Example 3

A test piece was manufactured in the same manner as in Example 1 except for the point that the entire one surface of the plate member was subjected to the laser treatment twice as in Example 2, and was then further subjected to microwave plasma treatment under vacuum. The microwave plasma treatment was performed as follows. First, the plate member was placed in a vacuum vessel, and the inside of the vacuum vessel was made into a pressure reduction state of 0.5 Pa or less. Then, oxygen gas was supplied into the vacuum vessel to form oxygen gas atmosphere with pressure of 10 Pa. In that state, the microwave plasma was generated with a frequency of 2.45 GHz and output electric power of 2 kW. The entire one surface of the plate member after the laser treatment was irradiated with the microwave plasma for 10 seconds. Thus, the entire one surface was activated to generate hydroxyl groups on the surface. The microwave plasma treatment of Example 3 corresponds to the modification step in the present invention.

In Example 3, a plurality of plate members subjected to laser treatment and microwave plasma treatment was similarly manufactured. By using the plate members, the water contact angle of the one surface of each of the plate members after the microwave plasma treatment (modification step) was measured immediately after the microwave plasma treatment and whenever specified time lapsed as described later. XPS analysis of the surface was also conducted immediately after the microwave plasma treatment. The plate members after the measurement were sequentially provided to the compounding step.

### Comparative Example 1

A test piece was manufactured in the same manner as in Example 1 except for the point that the entire one surface of the plate member same as Example 1 was not subjected to the laser treatment. That is, the plate member was simply formed by die casting, and then the silicone material was molded on the plate member by injection molding.

### Comparative Example 2

A test piece was manufactured in the same manner as in Example 1 except for the point that the conditions of laser treatment were changed. The conditions of the laser treatment include moving velocity of 400 mm/second and laser irradiation density of 0.8 J/mm². Since the laser treatment has a low laser irradiation density, it corresponds to the removal step in the present invention. That is, in Comparative Example 2, the test piece was manufactured without melting the surface layer of the one surface (without the melting step).

In Comparative Example 2, a plurality of plate members subjected to the laser treatment was similarly manufactured. By using the plate members, the water contact angle of the one surface of each of the plate members after the laser treatment (removal step) was measured immediately after the laser treatment and whenever specified time lapsed as described later. The plate members after the measurement were sequentially provided to the compounding step.

### Measurement of Water Contact Angle

The test pieces of Example 2, Example 3, and Comparative Example 2 were each subjected to measurement of the water contact angle of the one surface after the laser treatment and the like (before the compounding step). The measurement of the water contact angle was performed four times i.e., immediately after the treatment, one hour after the treatment, one day after the treatment, and seven days after the treatment. The water contact angle was measured according to JIS R3257:1999. That is, water of a fluid volume of 2 µl was dropped on the one surface of each of the plate members, and the water contact angle was measured within one minute after the water was in contact with the one surface.

### Analysis by X-ray Photoelectron Spectroscopy (XPS)

The one surface of each test piece of Example 3 immediately after the microwave plasma treatment (immediately after the modification step) was subjected to XPS analysis to check the ratio of C atoms, O atoms, and A1 atoms present on the surface. As a comparison, one surface of the untreated test piece of Comparative Example 1 was subjected to XPS analysis to check the ratio of C atoms, O atoms, and Al atoms present on the surface.

### Evaluation of Adhesiveness

The test pieces of the Examples 1 to 3 and Comparative Examples 1 and 2 were subjected to 90-degree peel test defined in JIS K 6256-2:2013 to evaluate adhesiveness of the silicone member to the plate member. When peel strength was 4 N/mm or more and cohesive failure occurred as a result of the 90-degree peel test, the adhesiveness was determined to be good ("○" in Tables 1 and 2 described later). When the peel strength was less than 4 N/mm or when the interfacial peeling occurred, adhesiveness was determined to be failed ("×" in Tables 1 and 2). In the case of the cohesive failure, a remaining rubber ratio was defined as 100%. In the case of the interfacial peeling, the remaining rubber ratio was calculated by quantifying a rubber bonding area in a fixed range through image analysis with an optical microscope.

### Evaluation Result

The evaluation results of the adhesiveness in Examples 1 to 3 and Comparative Example 2 are shown in Table 1. In Table 1, evaluation of the adhesiveness was performed when the silicone material was integrally molded one hour after the laser treatment and the like. Table 2 shows evaluation results of the water contact angle and the adhesiveness in Example 2, Example 3, and Comparative Example 2. Table 3 shows the result of XPS analysis of the test pieces of Example 3 and Comparative Example 1. In Table 3, evaluation of the adhesiveness of the test pieces of Example 3 was performed when the silicone material was integrally molded one hour after the microwave plasma treatment.

**[Table 1]**

| | | Removal step | Melting step | Modification step | Peeling force [N/mm] | Remaining rubber ratio [%] | Adhesiveness |
|---|---|---|---|---|---|---|---|
| Example 1 | Carbide film removal + surface layer melting (concurrent treatment) | 5.0 J/mm² | | - | 6.3 | 100 (Cohesive failure) | ○ |
| Example 2 | Carbide film removal + surface layer melting (two-stage treatment) | 0.8 J/mm² | 5.0 J/mm² | - | 6.2 | 100 (Cohesive failure) | ○ |
| Example 3 | Carbide film removal + surface layer melting + reforming treatment | 0.8 J/mm² | 5.0 J/mm² | 2 kW | 6.3 | 100 (Cohesive failure) | ○ |
| Comparative Example 2 | Carbide film removal only | 0.8 J/mm² | - | - | 2.2 | (Interfacial peeling) | × |

**[Table 2]**

| | Example 2 | | Example 3 | | Comparative Example 2 | |
|---|---|---|---|---|---|---|
| | Carbide film removal + surface layer melting | | Carbide film removal + surface layer melting + modification | | Carbide film removal only | |
| | Water contact angle | Adhesiveness | Water contact angle | Adhesiveness | Water contact angle | Adhesiveness |
| Immediately after treatment | 40° | ○ | <10° | ○ | 30° | ○ |
| One hour after | 80° | ○ | <10° | ○ | 80° | × |
| One day after | 80° | ○ | <10° | ○ | 80° | × |
| Seven days after | 80° | × | 40° | ○ | 80° | × |

**[Table 3]**

| | | XPS analysis | | | Adhesiveness |
|---|---|---|---|---|---|
| | | C (%) | ○ (%) | A1 (%) | |
| Example 3 | Carbide film removal + surface layer melting + modification | 17 | 47 | 36 | ○ |
| Comparative Example 1 | Untreated | 55 | 38 | 7 | × |

As shown in Table 1, in each of the test pieces of Examples 1 to 3 where the melting of the joint surface was performed, the peeling force in the 90-degree peel test was over 6 N/mm, and cohesive failure occurred. When the removal and the melting were concurrently performed (Example 1) or when the removal was performed separately from the melting (Example 2), the test pieces having the integrally-molded (compounded) silicone material one hour after the melting did not show significant difference in adhesiveness. On the contrary, the test pieces of Comparative Example 2 without the melting had a peeling force of less than 4 N/mm, and interfacial peeling occurred.

As shown in Table 2, in the test pieces of Comparative Example 2 where the melting of the joint surface was not performed, good adhesiveness was achieved only in the test pieces compounded immediately after the removal due to the effect of removal of the carbide film. However, the water contact angle was large in other test pieces, and therefore the adhesiveness was poor. On the contrary, in the test pieces of Example 2 with the melting performed, the adhesiveness was enhanced as compared with Comparative Example 2. The reasons for the enhanced adhesiveness include the fact that the joint surface was activated by the melting and uneven distribution of the hydroxyl groups decreased due to the grain boundaries being decreased and the surface layer being evened. In the test pieces of Example 3 where the modification was performed after the melting of the joint surface, good adhesiveness was achieved as the water contact angle immediately after the modification was as small as less than 10 degrees, and the water contact angle after seven days was 50 degrees or less. The smaller water contact angle indicates higher hydrophilicity. In the test pieces of Example 3, it was estimated that the number of the hydroxyl groups on the surface was large. The test pieces of Example 2 where the modification of the joint surface was not performed had good adhesiveness except the test pieces compounded seven days after the melting. However, the water contact angle was larger than that of the test pieces of Example 3. The reason for the larger water contact angle is considered to be attributed to a stripe-shaped asperity formed during laser irradiation, the asperity corresponding to a spot diameter along a scanning direction.

As shown in Table 3, the XPS analysis of the joint surface immediately after the modification indicated that the ratio of C atoms in the test pieces of Example 3 was 30% or less, whereas the ratio of C atoms was over 50% in the test pieces of Comparative Example 1 where the modification was not performed. The result indicates that the carbide film present on the joint surface was removed by application of the laser treatment. The adhesiveness of the test pieces of Comparative Example 1 where neither the removal nor the melting was performed was naturally poor.

As described in the foregoing, it was confirmed that the melting of the surface layer performed by irradiating the joint surface of the aluminum die cast member with a laser enhanced the adhesiveness since the carbide film was removed and the surface layer was evened and activated. In addition, it was confirmed that irradiation of the joint surface with plasma to impart hydroxyl groups suppressed temporal reduction of the hydroxyl groups and maintained the high reactivity with the polymeric material for a relatively long time.

The method for manufacturing a composite member of the present invention is useful as a method for manufacturing various composite members used for electronic control device such as engine control units mounted on vehicles, electronic equipment for compact portable terminal equipment, and the like.

The present invention relates to the following items:
1. A method for manufacturing a composite member having an aluminum die cast member and a polymer member compounded with each other, the method comprising:
   a melting step of melting a surface layer of a joint surface of the aluminum die cast member by irradiating the joint surface with a laser, the joint surface being joined with the polymer member; and
   a compounding step of integrally molding a polymeric material on the joint surface.
2. The method according to item 1, wherein an irradiation density of the laser in the melting step is 2 J/mm² or more and 40 J/mm² or less.
3. The method according to item 1 or 2, further comprising, before the melting step, a removal step of removing a carbide film present on the joint surface by irradiating the joint surface with a laser.
4. The method according to item 3, wherein the irradiation density of the laser in the removal step is lower than the irradiation density of the laser in the melting step.
5. The method according to item 3 or 4, wherein the irradiation density of the laser in the removal step is 0.5 J/mm² or more and less than 2 J/mm².
6. The method according to any one of items 1 to 5, further comprising, after the melting step, a modification step of irradiating the joint surface with plasma to impart a hydroxyl group to the joint surface.
7. The method according to item 6, wherein the irradiation with the plasma in the modification step is performed in a gas atmosphere containing oxygen.
8. The method according to item 7, wherein
   the gas atmosphere containing oxygen is made of oxygen gas only, or made of mixed gas formed by mixing one or more kinds of gases, selected from noble gases and nitrogen gas, with the oxygen gas, and
   when the oxygen gas is made of the mixed gas, a content ratio of the oxygen gas is 30% or more with pressure or volume of the entire mixed gas being 100%.
9. The method according to any one of items 6 to 8, wherein the plasma is microwave plasma.
10. The method according to any one of items 1 to 5, wherein the melting step and the compounding step are performed in succession without interruption.
11. The method according to any one of items 6 to 9, wherein the modification step and the compounding step are performed in succession without interruption or at an interval of one week or less.
12. The method according to any one of items 1 to 11, wherein a water contact angle of the joint surface before the compounding step is 50 degrees or less.
13. The method according to any one of items 1 to 12, wherein when the joint surface before the compounding step is analyzed by X-ray photoelectron spectroscopy, the number of C atoms is 5% or more and 30% or less with a ratio of the total number of A1 atoms, O atoms, and C atoms being 100%.
14. The method according to any one of items 1 to 13, wherein the polymer member is a silicone member, and the polymeric material is a silicone material.

## Claims

1. A method for manufacturing a composite member having an aluminum die cast member and a silicone member compounded with each other, the method comprising:
a melting step of melting a surface layer of a joint surface of the aluminum die cast member by irradiating the joint surface with a laser, the joint surface being joined with the silicone member; and
a compounding step of integrally molding a silicone material on the joint surface.

2. The method according to claim 1, wherein an irradiation density of the laser in the melting step is 2 J/mm² or more and 40 J/mm² or less.

3. The method according to claim 1 or 2, further comprising, before the melting step, a removal step of removing a carbide film present on the joint surface by irradiating the joint surface with a laser.

4. The method according to claim 3, wherein the irradiation density of the laser in the removal step is lower than the irradiation density of the laser in the melting step.

5. The method according to claim 3 or 4, wherein the irradiation density of the laser in the removal step is 0.5 J/mm² or more and less than 2 J/mm².

6. The method according to any one of claim 1 to 5, further comprising, after the melting step, a modification step of irradiating the joint surface with plasma to impart a hydroxyl group to the joint surface.

7. The method according to claim 6, wherein the irradiation with the plasma in the modification step is performed in a gas atmosphere containing oxygen.

8. The method according to claim 7, wherein
the gas atmosphere containing oxygen is made of oxygen gas only, or made of mixed gas formed by mixing one or more kinds of gases, selected from noble gases and nitrogen gas, with the oxygen gas, and
when the oxygen gas is made of the mixed gas, a content ratio of the oxygen gas is 30% or more with pressure or volume of the entire mixed gas being 100%.

9. The method according to any one of claims 6 to 8, wherein the plasma is microwave plasma.

10. The method according to any one of claims 1 to 5, wherein the melting step and the compounding step are performed in succession without interruption.

11. The method according to any one of claims 6 to 9, wherein the modification step and the compounding step are performed in succession without interruption or at an interval of one week or less.

12. The method according to any one of claims 1 to 11, wherein a water contact angle of the joint surface before the compounding step is 50 degrees or less.

13. The method according to any one of claims 1 to 12, wherein when the joint surface before the compounding step is analyzed by X-ray photoelectron spectroscopy, the number of C atoms is 5% or more and 30% or less with a ratio of the total number of Al atoms, O atoms, and C atoms being 100%.
